# EUROPEAN PATENT APPLICATION

(11) **EP 4 609 692 A1**
(43) Date of publication of application: **03.09.2025**
(21) Application number: 25160313.0
(22) Date of filing: 26.02.2025
(51) Int. Cl.: A01D 34/82

(54) **PREVENTION OF UNINTENDED POWER EQUIPMENT OPERATION**

(30) Priority: 27.02.2024 US 202418588982
(71) Applicant: Black & Decker, Inc., New Britain, CT 06053 (US)
(72) Inventor: KOWALSKI, Michael James, Towson, 21286 (US); ROSENTHAL, Matthew Michael, Parkville, 21234 (US); POOLE, Brian Edward, Timonium, 21093 (US)
(74) Representative: SBD IPAdmin

(57) **Abstract**

A power equipment may include a controller, a motor to actuate a work implement, a first element, a second element housing the motor, in which the first element is rotatably mounted to the second element. The power equipment may also include a first sensor positioned to detect an orientation of the first element and a second sensor positioned to detect an orientation of the second element. The first sensor outputs a first signal corresponding to the detected orientation of the first element to the controller and the second sensor outputs a second signal corresponding to the detected orientation of the second element to the controller. In addition, the controller may enable or disable the motor based on both the first signal and the second signal.

## Description

### FIELD

The present disclosure is directed to power equipment. Particularly, the present disclosure is directed to power equipment having first orientation sensors provided in or on first elements and second orientation sensors provided in or on second elements of the power equipment, such that motors of the power equipment may be disabled when either or both of the first elements and the second elements are detected to be outside of certain respective orientation ranges. In other words, the motors may be disabled to prevent unintended operation of the power equipment when the first elements or the second elements are in certain positions with respect to each other and/or gravity.

### BACKGROUND

Power equipment, such as lawn mowers, snow throwers, tillers, cultivators, trimmers, edgers, and other types of power equipment, often include handles for use by operators to push, pull, or otherwise maneuver the power equipment. The handles are typically connected to a main body or chassis of the power equipment. The handles may include a single cross-bar with a grip portion for both of the operator's hands or may include two bars with grips for respective hands of the operator. In many types of power equipment, the handles are rotatably mounted to the main body such that the handles may be moved between a work position and a storage position. In the work position, the handles may extend away from the main body such that the handles extend at an angle greater than about 90° from the main body. In the storage position, the handles may extend at an angle less than about 45° from the main body. When the handles are in the storage position, some types of power equipment may be stored vertically.

### SUMMARY

This section provides a general summary of the disclosure, and is not a comprehensive disclosure of its full scope or all of its features.

In an aspect of the invention, there is provided a power equipment comprising: a controller; a motor to actuate a work implement; a first element; and a second element supporting the motor, wherein the first element is rotatably mounted to the second element. The power equipment further comprises a first sensor positioned to detect an orientation of the first element, wherein the first sensor is configured to output a first signal corresponding to the detected orientation of the first element to the controller. The power equipment further comprises a second sensor positioned to detect an orientation of the second element, wherein the second sensor is configured to output a second signal corresponding to the detected orientation of the second element to the controller. The controller is configured to enable or disable the motor based on both the first signal and the second signal.

The power equipment may further comprise: a first logic block in communication with the first sensor, wherein the first logic block is configured to: determine, based on the first signal, whether the orientation of the first element is outside of a first predefined orientation range; generate a first notification to indicate that the first element is outside of the first predefined orientation range based on a determination that the first element is outside of the first predefined orientation range; and output the first notification to the controller, wherein the controller is configured to disable the motor based on receipt of the first notification indicating that the orientation of the first element is outside of the first predefined orientation range. The first predefined orientation range may be between about -15° and about 80° from the horizontal axis.

The power equipment may further comprise: a second logic block in communication with the second sensor, wherein the second logic block is configured to: determine, based on the second signal, whether the orientation of the second element is outside of a second predefined orientation range; generate a second notification to indicate that the orientation of the second element is outside of the second predefined orientation range based on a determination that the orientation of the second element is outside of the second predefined orientation range; and output the second notification to the controller, wherein the controller is configured to disable the motor based on receipt of the second signal indicating that the orientation of the second element is outside of the second predefined orientation range. The second predefined orientation range may be between about 45° and about -30° from the horizontal axis.

The controller may be configured to enable the motor based on the first signal indicating that the orientation of the first element is within a first predefined orientation range and the second signal indicating that the orientation of the second element is within a second predefined orientation range.

The controller may be configured to disable the motor based on at least one of the first signal indicating that the orientation of the first element is outside of the first predefined orientation range or the second signal indicating that the orientation of the second element is outside of the second predefined orientation range.

The first signal may indicate the detected orientation of the first element and the controller may be configured to: determine, from the first signal, whether the orientation of first element is outside of a first predefined orientation range; and disable the motor based on a determination that the orientation of the first element is outside of the first predefined orientation range.

The second signal may indicate the detected orientation of the second element, and the controller may be configured to: determine, from the second signal, whether the orientation of the second element is outside of a second predefined orientation range; and disable the motor based on a determination that the orientation of the second element is outside of the second predefined orientation range.

In an aspect of the invention, there is provided a power equipment comprising: a controller; a work implement; a motor to rotate the work implement; a first element; and a second element housing the motor, wherein the first element is rotatably mounted to the second element. The power equipment further comprises a first sensor mounted on the first element, wherein the first sensor is configured to: detect at least one orientation of the first element; and output a first signal corresponding to the detected at least one orientation of the first element to the controller. The power equipment further comprises a second sensor mounted to the second element, wherein the second sensor is configured to: detect at least one orientation of the second element; and output a second signal corresponding to the detected at least one orientation of the second element to the controller. The controller is configured to disable the motor based on either of the orientation of the first element being outside of at least one first predefined orientation range or the orientation of the second element being outside of at least one second predefined orientation range.

The power equipment may further comprise: a first logic block in communication with the first sensor, wherein the first logic block is configured to: receive at least one orientation of the first sensor; determine whether the at least one orientation of the first sensor is outside of one or more first predefined orientation ranges; generate the first signal to indicate that the motor is to be disabled based on a determination that the at least one orientation of the first sensor is outside of one or more of the first predefined orientation ranges; and output the first signal to the controller, wherein the controller is configured to disable the motor based on receipt of the first signal indicating that the motor is to be disabled.

The power equipment may further comprise: a second logic block in communication with the second sensor, wherein the second sensor is configured to: receive at least one orientation of the second sensor; determine whether the at least one orientation of the second sensor is outside of one or more second predefined orientation ranges; generate the second signal to indicate that the motor is to be disabled based on a determination that the at least one orientation of the second sensor is outside of one or more of the second predefined orientation ranges; and output the second signal to the controller, wherein the controller is configured to disable the motor based on receipt of the second signal indicating that the motor is to be disabled.

The controller may be configured to enable the motor based on the first signal indicating that the at least one orientation of the first element is within each of multiple first predefined orientation ranges and the second signal indicating that the at least one orientation of the second element is within each of multiple second predefined orientation ranges.

The first signal may indicate the detected orientation of the first element, and the controller may be configured to: determine, from the first signal, whether the at least one orientation of the first element is outside of one or more first predefined orientation ranges; and disable the motor based on a determination that the at least one orientation of the first signal is outside of the one or more first predefined orientation ranges.

The second signal may indicate the detected orientation of the second element, and the controller may be configured to: determine, from the second signal, whether the at least one orientation of the second element is outside of one or more second predefined orientation ranges; and disable the motor based on a determination that the at least one orientation of the second element is outside of the one or more second predefined orientation ranges.

Each of the first sensor and the second sensor may be a three axis accelerometer.

In an aspect of the present invention, there is provided a method comprising: receiving, by a controller, a first signal corresponding to a detected orientation of a first sensor positioned on a first element of a power equipment, wherein the power equipment includes a motor to actuate a work implement of the power equipment; receiving, by the controller, a second signal corresponding to a detected orientation of a second sensor positioned on a second element of the power equipment, wherein the first element is rotatably mounted to the second element; determining, by the controller, whether the motor is to be enabled or disabled based on the first signal and the second signal; and enabling or disabling, by the controller, the motor based on the determination.

The first signal corresponding to the detected orientation of the first sensor may include an indication as to whether the detected orientation of the first sensor is within a first predefined orientation range. The second signal corresponding to the detected orientation of the second sensor may include an indication as to whether the detected orientation of the second sensor is within a second predefined orientation range. Determining whether the motor is to be enabled or disabled may further comprise: determining that the motor is to be disabled based on either of: the first signal indicating that the detected orientation of the first sensor is outside of the first predefined orientation range; or the second signal indicating that the detected orientation of the second sensor is outside of the second predefined orientation range.

The first signal corresponding to the detected orientation of the first sensor may comprise a first value corresponding to the detected orientation of the first sensor. The second signal corresponding to the detected orientation of the second sensor may comprise a second value corresponding to the detected orientation of the second sensor. Determining whether the motor is to be enabled or disabled may further comprise: determining whether the first value indicates that the first sensor is at an orientation that is within a first predefined orientation range; determining whether the second value indicates that the second sensor is at an orientation that is within a second predefined orientation range; and determining that the motor is to be disabled based on a determination that: the orientation of the first sensor is outside of the first predefined orientation range; or the orientation of the second sensor is outside of the second predefined orientation range.

The first signal may correspond to orientations of the first sensor detected across multiple axes. The second signal may correspond to orientations of the second sensor detected across multiple axes. Determining whether the motor is to be enabled or disabled may further comprise: determining that the motor is to be disabled based on either of: the first signal indicating that any of the detected orientations of the first sensor is outside of respective first predefined orientation ranges; or the second signal indicating that any of the detected orientations of the second sensor is outside of respective second predefined orientation ranges.

In an aspect of the invention, there is provided a power equipment comprising: a controller, a motor to actuate a work implement, a first element housing the motor, a second element rotatably mounted to the first element, a first sensor positioned to detect an orientation of the first element, in which the first sensor outputs a first signal corresponding to the detected orientation of the first element to the controller, and a second sensor positioned to detect an orientation of the second element, in which the second sensor outputs a second signal corresponding to the detected orientation of the second element to the controller. In addition, the controller may enable or disable the motor based on both the first signal and the second signal.

In an aspect of the invention, there is provided a power equipment comprising: a controller, a work implement, a motor to rotate the work implement, a first element, a second element housing the motor, in which the first element is rotatably mounted to the second element, a first sensor mounted on the first element. The first sensor detects at least one orientation of the first element and outputs a first signal corresponding to the detected at least one orientation of the first element to the controller. The power equipment may also include a second sensor mounted to the second element, in which the second sensor detects at least one orientation of the second element and outputs a second signal corresponding to the detected at least one orientation of the second element to the controller. In addition, the controller disables the motor based on either of the orientation of the first element being outside of at least one first predefined orientation range or the orientation of the second element being outside of at least one second predefined orientation range.

In an aspect of the invention, there is provided a method comprising: receiving, by a controller, a first signal corresponding to a detected orientation of a first sensor positioned on a first element of a power equipment, in which the power equipment includes a motor to actuate a work implement of the power equipment. The method may also include receiving, by the controller, a second signal corresponding to a detected orientation of a second sensor positioned on a second element of the power equipment, in which the first element is rotatably mounted to the second element. The method may further include determining, by the controller, whether the motor is to be enabled or disabled based on the first signal and the second signal and enabling or disabling, by the controller, the motor based on the determination.

### BRIEF DESCRIPTION OF THE DRAWINGS

Features of the present disclosure are illustrated by way of example and not limited in the following figure(s), in which like numerals indicate like elements, in which:
FIGS. 1A-1C, respectively, show a power equipment in various first element and second element positions, according to an embodiment of the present disclosure;
FIG. 1D shows a power equipment, in which the power equipment is in an orientation in which the controller may disable the motor, according to an embodiment of the present disclosure;
FIG. 1E shows a front elevational view of the power equipment depicted in FIG. 1D, according to an embodiment of the present disclosure;
FIGS. 1F-1H, respectively, depict perspective views of a string trimmer at multiple positions, in accordance with an embodiment of the present disclosure;
FIGS. 2A-2D, respectively, depict block diagrams of various configurations in which the first sensor and the second sensor shown in FIGS. 1A-1C may respectively determine and communicate the first signal and the second signal to the controller, according to embodiments of the present disclosure; and
FIG. 3 shows a flow diagram of a method for controlling a motor in a power equipment, in accordance with an embodiment of the present disclosure.

### DETAILED DESCRIPTION

Many types of power equipment, such as walk-behind lawn mowers, edgers, trimmers, etc., have handles that operators of the power equipment use to maneuver the power equipment. The handles are often movable between a work position and a storage position. In the work position, the operator may be kept at a safe distance from a work implement, e.g., blades, of the power equipment. However, when in the storage position, such as when the handle is collapsed or folded, the operator may be able to both press a trigger to actuate the work implement and be sufficiently close to the work implement to be harmed by the work implement. In other words, the handle, when in the collapsed or folded state, may be unable to keep the operator from violating a set back distance from the work implement. This may particularly be dangerous when the power equipment is stored vertically and the work implement may be exposed.

Disclosed herein are power equipment that may include a first sensor positioned to detect an orientation of a first element (e.g., a handle, a first member, a top portion, or the like) and a second sensor positioned to detect an orientation of a second element (e.g., a chassis, a housing, a second member, a bottom portion, or the like) of a power equipment. In some examples, the first sensor may detect the orientation of the first element and the second sensor may detect the orientation of the second element relative to gravity. In other examples, the first sensor may detect the orientation of the first element relative to gravity and the second sensor may detect the orientation of the second element relative to the first element. In still other examples, the first sensor may detect the orientation of the first element relative to the second element and the second sensor may detect the orientation of the second element relative to gravity.

In any of these examples, the power equipment may include a controller that may determine whether the first element is at an orientation that is outside of a first predefined orientation range and whether the second element is at an orientation that is outside of a second predefined orientation range. In some examples, the first predefined orientation range and the second predefined orientation range may include ranges that have been determined to keep an operator outside of a set back distance. In other words, the predefined orientation ranges may be set to keep the operator at a safe distance away from the work implement of the power equipment. Additionally, the controller may disable a motor of the power equipment that actuates the work implement based on a determination that the orientation of the first element is outside of the first predefined orientation range and/or a determination that the orientation of the chassis is outside of the second predefined orientation range. In other words, the controller may enable the motor based on a determination that both the orientation of the first element is within the first predefined orientation range and that the orientation of the second element is within the second predefined orientation range.

Through implementation of the features of the present disclosure, a work implement of a power equipment may be enabled when both the first element and the second element are within certain orientations. As a result, in instances in which the first element, e.g., a handle, a top portion, or the like, of the power equipment is in a safe position, but the second element, e.g., a chassis, a housing, a bottom portion, or the like, of the power equipment is in an unsafe position, the work implement may be prevented from actuating. Likewise, in instances in which the second element is in a safe position, but the first element is in an unsafe position, the work implement may be prevented from actuating. Operators of the power equipment disclosed herein may thus be able to operate the power equipment safely. In other words, unintended operation of the work implement and/or the power equipment may be prevented.

Before continuing, it is noted that as used herein, the terms "includes" and "including" mean, but are not limited to, "includes" or "including" and "includes at least" or "including at least." The term "based on" means, but is not limited to, "based on" and "based at least in part on."

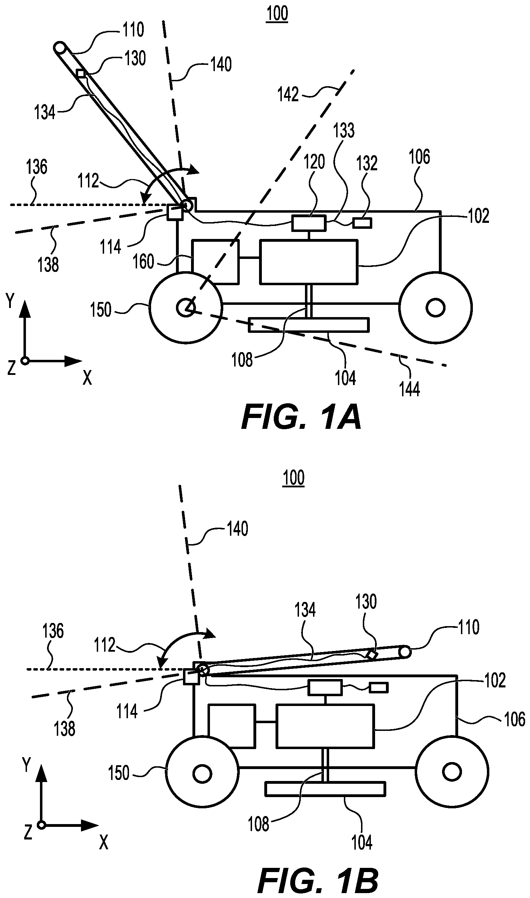

FIGS. 1A-1C, respectively, show a power equipment 100 in various first element and second element positions, according to an embodiment of the present disclosure. It should be understood that the power equipment 100 depicted in FIGS. 1A-1C may include additional components and that some of the components described herein may be removed and/or modified without departing from the scope of the power equipment 100 disclosed herein. It should also be understood that the components depicted in FIGS. 1A-1C are located in certain positions for purposes of illustration and should thus not be construed as limiting the power equipment 100 in any respect. For example, the first element 110 is secured to a top portion of a second element 106, but could be secured to the second element 106 at a lower portion of the second element 106 in other examples.

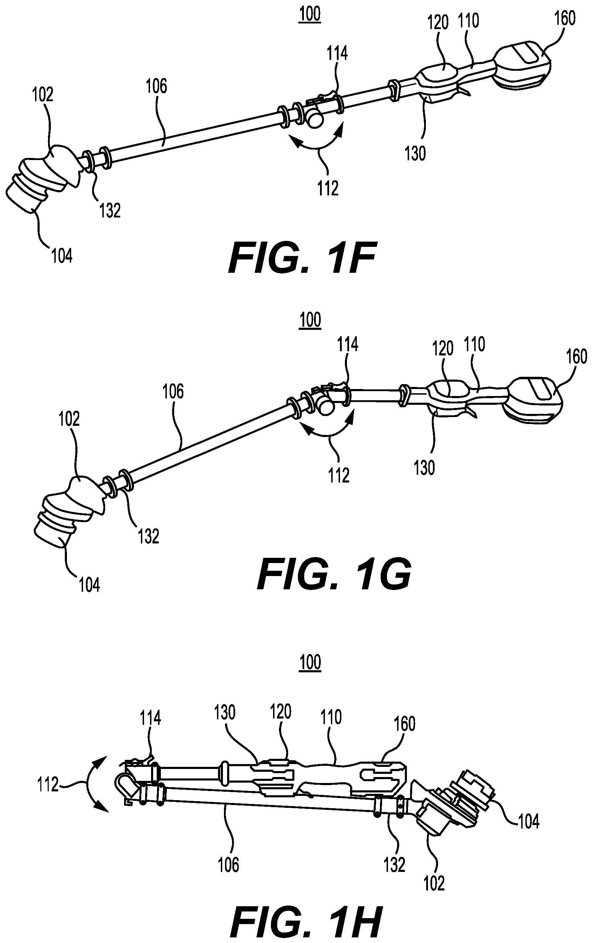

The power equipment 100, which may also be termed a walk-behind power equipment 100 that includes a motor 102 and a work implement 104, may be any type of power equipment that an operator may stand or walk behind while operating the power equipment. For instance, the power equipment 100 may be a lawn mower, a motorized snow thrower, a motorized tiller, a motorized cultivator, a dethatcher, an aerator, a walk-behind string trimmer, a stump grinder, a compactor, a sod cutter, a trencher, and/or the like. In examples in which the power equipment 100 is a lawn mower as shown in FIGS. 1A-1E, the work implement 104 may be a mower blade. In other examples in which the power equipment 100 is a motorized snow thrower, the work implement 104 may be an auger or other type of device. In examples in which the power equipment 100 is a motorized tiller, the work implement 104 may be tiller blades. In examples in which the power equipment 100 is a string trimmer as shown in FIGS. 1F-1H, the work implement may be strings and a mounting member of the strings.

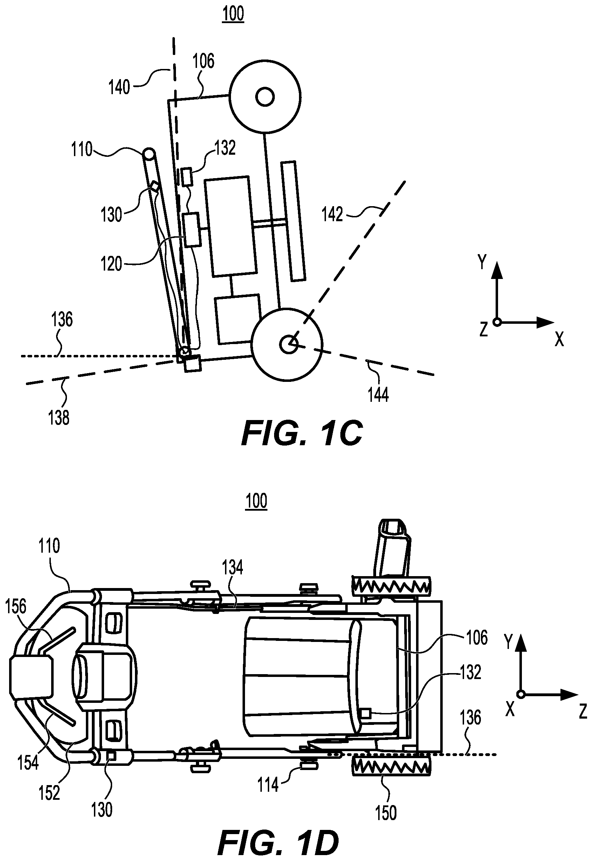

As shown in FIG. 1A, the power equipment 100 may also include a first element 110 that is rotatably mounted to a second element 106. The first element 110 may also be termed a handle, a top portion, a first portion, or the like). The second element 106 may also be termed a chassis, a main body, a mower chassis, a deck, a housing, a bottom portion, a second portion, or the like. In any regard, the second element 106 may house or otherwise support the motor 102. In addition, the motor 102 may be attached to and may drive the work implement 104, for instance, through a drive shaft 108. In instances in which the first element 110 is a handle, the first element 110 may collectively include a cross-bar portion that an operator may grasp and connecting rods or other devices that extend from that portion to the second element 106. As shown, the first element 110 may be mounted to the second element 106 via a rotatable mounting such that the first element 110 may be rotated with respect to the second element 106 at various angles as denoted by the arrows 112. For instance, the first element 110 may be rotated between an operating position as shown in FIG. 1A and a storage position as shown in FIGS. 1B and 1C.

In the operating position, an operator of the power equipment 100 may push or otherwise maneuver the power equipment 100 by applying a force on the first element 110. Additionally, the power equipment 100 may include a locking mechanism, which is schematically illustrated by the box 114. The locking mechanism 114 may lock the first element 110 in the operating position until the locking mechanism 114 is released. The locking mechanism 114 may also lock the first element 110 in the storage position until the locking mechanism 114 is released. The locking mechanism 114 may include any suitable type of mechanism that may securely, but releasably, hold the first element 110 in the operating position and in some instances, in the storage position.

In addition to enabling the operator to maneuver the power equipment 100, the first element 110 may keep the operator at a safe distance away from the second element 106 and thus, the work implement 104, during normal use of the work equipment 100. That is, when the operator is standing in a position to normally grasp the first element 110, the operator may also be kept at a distance from the work implement 104 to prevent the operator from harm from the work implement 104. As a result, when the operator presses a bail handle 152 (shown in FIG. 1D) or other mechanism positioned on the handle for activating the motor 102 to cause the work implement 104 to actuate, e.g., rotate and/or translate, the operator will be at a sufficiently safe distance from the work implement 104.

As also shown in FIG. 1A, the power equipment 100 may include a controller 120 that may control operations of the motor 102. The controller 120 may be any suitable type of electronic unit that may control the motor 102, such as a field programmable gate array (FPGA), a microprocessor, an application-specific integrated circuit (ASIC), or the like. According to examples, the controller 120 may enable or disable the motor 102 depending upon whether the orientations of the second element 106 and the first element 110 are within certain respective orientation ranges. That is, when the controller 120 determines that the second element 106 and the first element 110 are within certain predefined respective orientation ranges, the controller 120 may enable the motor 102. For instance, when an operator pulls a bail handle 152 (shown in FIG. 1D) to activate the motor 102 and thus, the work implement 104, the controller 120 may enable the motor 102 to actuate the work implement 104. However, when the controller 120 determines that the first element 110 is at an angle that is outside of a first predefined orientation range and/or that the second element 106 is outside of a second predefined orientation range, the controller 120 may disable the motor 102. That is, when an operator pulls a bail handle 152 to activate the motor 102, the controller 120 may prevent the motor 102 from actuating, e.g., rotating, the work implement 104.

As shown in FIG. 1A, the power equipment 100 may include a first sensor 130 positioned to detect an orientation of the first element 110 and a second sensor 132 positioned to detect an orientation of the second element 106. It should be understood that the first sensor 130 may be positioned at any of a number of various locations in or on the first element 110 as long as the first sensor 130 is able to detect the orientation of the first element 110. The first sensor 130 may also be positioned at a location that may not interfere with other components in or on the first element 110. Likewise, the second sensor 132 may be positioned at any of a number of various locations in or on the second element 106 as long as the second sensor 132 is able to detect the orientation of the second element 106. The second sensor 132 may also be positioned at a location that may not interfere with other components in or on the second element 106.

In some examples, the first sensor 130 may detect the orientation of the first element 110 and the second sensor 132 may detect the orientation of the second element 106 with respect to gravity. In other examples, the first sensor 130 may detect the orientation of the first element 110 with respect to gravity and the second sensor 132 may detect the orientation of the second element 106 with respect to the first element 110. In these examples, the second sensor 132 may include an encoder or other mechanism to detect and track the orientation of the second element 106 with respect to the first element 110. In still other examples, the first sensor 130 may detect the orientation of the first element 110 with respect to the second element 106 and the second sensor 132 may detect the orientation of the second element 106 with respect to gravity. In these examples, the first sensor 130 may include an encoder or other mechanism to detect and track the orientation of the first element 110 with respect to the second element 106.

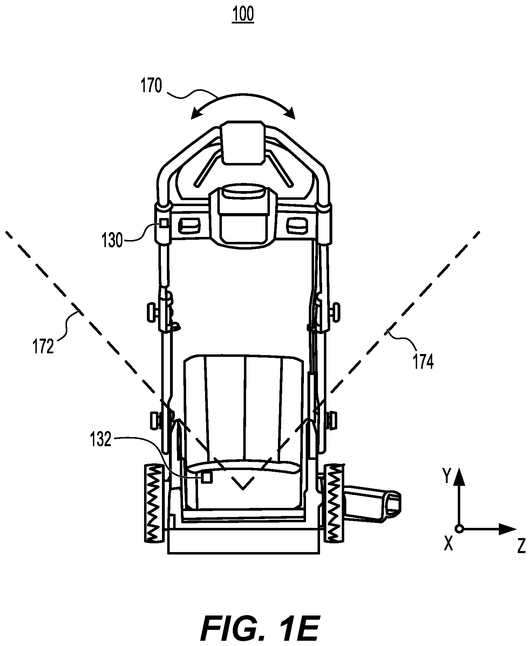

According to examples, the first sensor 130 and the second sensor 132 may each be an accelerometer, inclinometer, encoder, gyroscope, inertial measurement unit (IMU), or other suitable type of device for detecting changes in orientations. In some examples, the first sensor 130 and/or the second sensor 132 may detect orientations along a single axis, e.g., in the directions indicated by the arrows 112. In other examples, the first sensor 130 and/or the second sensor 132 may detect orientations along multiple axes, e.g., in two or three directions. In these examples, the first sensor 130 and/or the second sensor 132 may detect orientations in directions as indicated by the arrows 112 as well as in directions indicated by the arrows 170 in FIG. 1E. For instance, the first sensor 130 and/or the second sensor 132 may detect orientations as about each of the X, Y, and Z axes.

In any of these examples, the first sensor 130 may output a first signal corresponding to a detected orientation, e.g., tilt angle, rotation angle, etc., of the first sensor 130, and thus, the first element 110, to the controller 120. In addition, the second sensor 132 may output a second signal corresponding to a detected orientation, e.g., tilt angle, rotation angle, etc., of the second sensor 132, and thus, the second element 106, to the controller 120. The controller 120 may enable or disable the motor 102 based on both the first signal and the second signal. The first sensor 130 may output the first signal to the controller 120 through a first cable 134 and the second sensor 132 may output the second signal to the controller 120 through a second cable 133. In other examples, the first sensor 130 and/or the second sensor 132 may communicate signals to the controller 120 through a common cable or wirelessly.

According to examples, the first sensor 130 may include circuitry to determine whether the detected orientation of the first element 110 is outside of a first predefined orientation range. The circuitry may include, for instance, a first logic block, that may compare the detected orientation of the first element 110 with the first predefined orientation range. That is, the circuitry may determine whether the detected orientation of the first element 110 is within or outside of the first predefined orientation range. In addition, the circuitry may output the first notification to the controller 120 to indicate whether the detected orientation of the first element 110 is within or outside of the first predefined orientation range. The first predefined orientation range may be any suitable range of angles at which the power equipment 100 may be operated safely. The first predefined orientation range may be user-defined, learned through historical data, such as through use of artificial intelligence and/or machine learning techniques, determined through testing, etc. By way of particular example, the first predefined orientation range may be between about -15° and about 80° from the horizontal axis (denoted by the dashed line 136). In other words, the first predefined orientation range may approximately be between the dashed lines 138 and 140 as shown in FIG. 1A.

In examples in which the first sensor 130 detects orientations along multiple axes, the circuitry may determine whether the detected orientations of the first element 110 are outside of first predefined orientation ranges for the respective axes. The first predefined orientation range for a first axis, e.g., about the Z-axis, may approximately be between the dashed lines 138 and 140 as discussed herein. In addition, the first predefined orientation range for a second axis, e.g., about the X-axis as shown in FIG. 1E, may approximately be between the dashed lines 172 and 174. By way of particular example, the first predefined orientation range may be between about 45° and about 135° from the horizontal axis (denoted by the dashed lines 172 and 174). In other examples, the first predefined orientation range may be between other angles without departing from a scope of the present disclosure.

The first predefined orientation ranges for the respective axes may also be user-defined, learned through historical data, such as through use of artificial intelligence and/or machine learning techniques, determined through testing, etc. By way of example, and as shown in FIG. 1A, the circuitry may determine whether the orientation of the first element 110 along the X-axis is outside of a first predefined orientation range about the Z-axis, whether the orientation of the first element 110 along the Y-axis is outside of a first predefined orientation range about the X-axis, and/or whether the orientation of the first element 110 along the Z-axis is outside of a first predefined orientation range about the Y-axis. In these examples, the first sensor 130 may output the first signal to indicate that the first element 110 is either within or outside of each of the first predefined orientation ranges. That is, for instance, the first sensor 130 may output the first signal to indicate that the first element 110 is outside of a first predefined orientation range in response to a determination that the orientation of the first element 110 is detected to be outside of any of the first predefined orientation ranges.

According to examples, the second sensor 132 may include circuitry to determine whether the detected orientation of the second element 106 is outside of a second predefined orientation range. The circuitry may include, for instance, a second logic block, that may compare the detected orientation of the second element 106 with the second predefined orientation range. That is, the circuitry of the second sensor 132 may determine whether the detected orientation of the second element 106 is within or outside of the second predefined orientation range. In addition, the circuitry of the second sensor 132 may output the second signal to the controller 120 to indicate whether the detected orientation of the second element 106 is within or outside of the second predefined orientation range. The second predefined orientation range may be any suitable range of angles and may be user-defined, learned through historical data, such as through use of artificial intelligence and/or machine learning techniques, determined through testing, etc. By way of particular example, the second predefined orientation range may be between about 45° and about -30° from the horizontal axis (denoted by the dashed line 136). In other words, the second predefined orientation range may approximately be between the dashed lines 142 and 144 as shown in FIG. 1A.

In examples in which the second sensor 132 detects orientations along multiple axes, the circuitry may determine whether the detected orientations of the second element 106 are outside of second predefined orientation ranges for the respective axes. The second predefined orientation range for a first axis, e.g., about the Z-axis, may approximately be between the dashed lines 142 and 144 as discussed herein. In addition, the second predefined orientation range for a second axis, e.g., about the X-axis as shown in FIG. 1E, may approximately be between the dashed lines 172 and 174. The second predefined orientation ranges for the respective axes may also be user-defined, learned through historical data, such as through use of artificial intelligence and/or machine learning techniques, determined through testing, etc. By way of example, and with reference to FIG. 1A, the circuitry may determine whether the orientation of the second element 106 along the X-axis is outside of a second predefined orientation range about the Z-axis, whether the orientation of the second element 106 along the Y-axis is outside of a second predefined orientation range about the X-axis, and/or whether the orientation of the second element 106 along the Z-axis is outside of a second predefined orientation range about the Y-axis. In these examples, the second sensor 132 may output the second signal to indicate that the second element 106 is either within or outside of each of the second predefined orientation ranges. That is, for instance, the second sensor 132 may output the second signal to indicate that the second element 106 is outside of a second predefined orientation range in response to a determination that the orientation of the second element 106 is detected to be outside of any of the second predefined orientation ranges.

According to examples, the controller 120 may enable the motor 102 to operate based on the first signal indicating that the first element 110 is at an orientation that is within the first predefined orientation range or ranges and the second signal indicating that the second element 106 is within the second predefined orientation range or ranges. Likewise, the controller 120 may disable the motor 102 from actuating the work implement 104 if the first signal indicates that the first element 110 is at an orientation that is outside of the first predefined orientation range or ranges, if the second signal indicates that the second element 106 is at an orientation that is outside of the second predefined orientation range or ranges, or if both the first element 110 and the second element 106 are outside of their respective predefined orientation range or ranges.

In instances in which the controller 120 enables the motor 102, the motor 102 may cause the work implement 104 to actuate, e.g., rotate, translate, etc. As the work implement 104 is actuated, an operator of the power equipment 100 may push the first element 110 to move the work equipment 100 forward, backward, or to a side. In some examples, the power equipment 100 includes a number of wheels 150 to facilitate movement of the power equipment 100. In some examples, the motor 102 or another motor (not shown) may drive one or more of the wheels 150 such that, for instance, the power equipment 100 may be self-propelled. In these examples, the controller 120 may also enable or disable the motor 102 or other motor from turning the wheels 150 depending upon the first signal and the second signal.

According to examples, the power equipment 100 may include a battery 160, which may be a rechargeable battery and/or a replaceable battery. In other examples, the power equipment 100 may include a power cable that may be plugged into a power outlet such that the power equipment 100 may receive power from the power outlet. In yet other examples, the power equipment 100 may include an internal combustion engine (not shown), such as a gas-powered combustion engine. In any of these examples, the controller 120 may block delivery of power to the motor 102 to disable the motor 102. In addition or alternatively, the controller 120 may prevent delivery of a signal from the controller 120 to the motor 102 in response to receipt of a signal from a trigger to cause the work implement 104 to be implemented to disable the motor 102.

Turning now to FIG. 1B, the first element 110 is depicted as being in a storage position. That is, the first element 110 may be in a collapsed position with respect to the second element 106 such that the power equipment 100 may occupy a relatively smaller amount of space as compared with the amount of space that the power equipment 100 occupies when the first element 110 is in the operating position as shown in FIG. 1A. While in the storage position as shown in FIG. 1B, the first element 110 may be outside of the first predefined orientation range. As a result, the first sensor 130 may output a first signal indicating that the first element 110 is outside of the first predefined orientation range to the controller 120. As the second element 106 is within the second predefined orientation range, the second sensor 132 may output a second signal indicating that the orientation of the second element 106 is within the second predefined orientation range to the controller 120. However, as the first signal indicates that the first element 110 is outside of the first predefined orientation range, the controller 120 may disable or prevent the motor 102 from actuating the work implement 104, for instance, when an operator instructs the controller 120 to activate the motor 102.

In some instances, the power equipment 100 may be stored in an upright manner, for instance, as shown in FIG. 1C. The power equipment 100 may be stored in this manner as this orientation may reduce the amount of horizontal space that the power equipment 100 occupies. As shown in FIG. 1C, the first element 110 may be within the first predefined orientation range as identified by the dashed lines 138 and 140. As a result, the first sensor 130 may communicate a first signal to the controller 120 that indicates that the first element 110 is within the first predefined orientation range. However, the second element 106 may be outside of the second predefined orientation range as identified by the dashed lines 142 and 144. As a result, the second sensor 132 may communicate a second signal to the controller 120 that indicates that the second element 106 is outside of the second predefined orientation range. As the second signal indicates that the second element 106 is outside of the second predefined position range, the controller 120 may disable or prevent the motor 102 from actuating the work implement 104. The controller 120 may thus enable the motor 102 to actuate the work implement 104 only when both the first signal indicates that the first element 110 is within the first predefined orientation range and the second signal indicates that the second element 106 is within the second predefined orientation range.

Turning now to FIG. 1D, there is shown a power equipment 100, in which the power equipment 100 is in an orientation in which the controller 120 may disable the motor 102, according to an embodiment of the present disclosure. The power equipment 100 depicted in FIG. 1D may include each of the components of the power equipment 100 depicted in FIGS. 1A-1C. The power equipment 100 is depicted in FIG. 1D as also including a bail handle 152 that an operator may pull to activate the motor 102. That is, when the bail handle 152 is pulled, an instruction to the controller 120 may be sent to activate the motor 102 and thus, the work implement 104. The power equipment 100 may further include a first trigger 154 and a second trigger 156 that when depressed, may send an instruction to the controller 120 to activate a self-drive mechanism of the power equipment 100.

In FIG. 1D, the power equipment 100 is depicted as being positioned on its side, e.g., rotated about the X-axis such that the second element 106 is oriented vertically beyond the first predefined orientation range for a second axis, e.g., about the X-axis and beyond the second predefined orientation range for the second axis. The first and second predefined orientation ranges are denoted by the dashed lines 172 and 174 in FIG. 1E. The power equipment 100 may be positioned as shown in FIG. 1D, for instance, to clear out debris from a bottom of the second element 106, to replace the work implement 104, etc. In the orientation shown in FIG. 1D, the first sensor 130 may detect that the orientation of the first sensor 130 along the X-axis is within a first predefined orientation range about the Z-axis, but may detect that the orientation along the Y-axis is outside of the first predefined orientation range about the X-axis. Likewise, the second sensor 132 may detect that the orientation of the second sensor 132 along the X-axis is outside a second predefined orientation range about the Z-axis, but may detect that the orientation along the Y-axis is within the second predefined orientation range corresponding to the X-axis. As a result, the first sensor 130 may output a first signal to the controller 120 indicating that the orientation of the first sensor 130 is outside of a first predefined orientation range and the second sensor 132 may output a second signal to the controller 120 indicating that the orientation of the second sensor 132 is outside of a second predefined orientation range. The controller 120 may also disable the motor 102 when the user releases the bail handle 152.

As discussed herein, in some examples, the first sensor 130 may include or may otherwise communicate with circuitry, e.g., a logic block, that may determine whether a detected orientation of the first sensor 130 is within or outside of the first predefined orientation range. The logic block of the first sensor 130, which may be a comparator set, a microcontroller, or the like, may also output the first signal to the controller 120. Likewise, the second sensor 132 may include or may otherwise communicate with circuitry, e.g., a logic block, that may determine whether a detected orientation of the second sensor 132 is within or outside of the second predefined orientation range. The logic block of the second sensor 132, which may be a comparator set, a microcontroller, or the like, may also output the second signal to the controller 120.

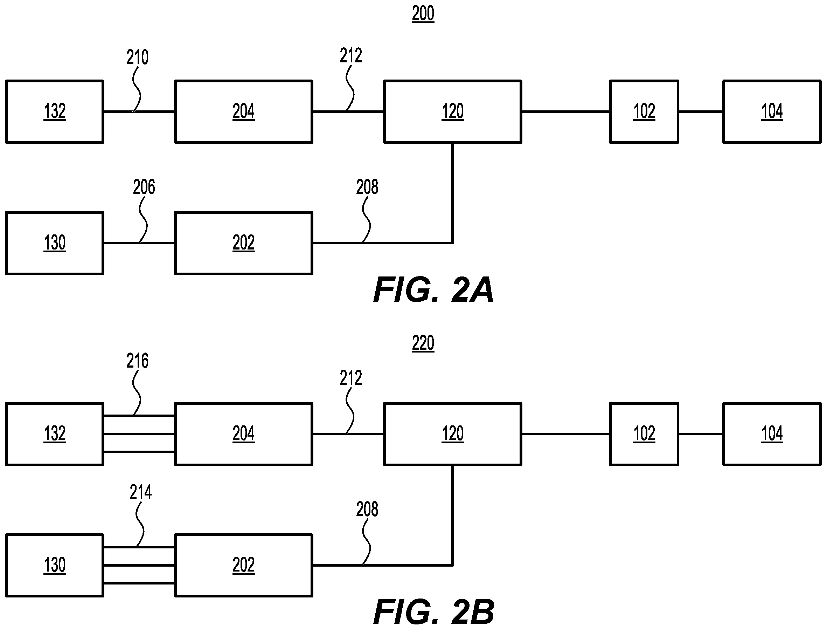

FIGS. 2A-2D, respectively, depict block diagrams of various configurations in which the first sensor 130 and the second sensor 132 shown in FIGS. 1A-1C may respectively determine and communicate the first signal and the second signal to the controller 120, according to embodiments of the present disclosure. It should be understood that the configurations of the first sensor 130 and the second sensor 132 depicted in FIGS. 2A-2D may be modified without departing from the scopes of the configurations disclosed herein.

With reference first to FIG. 2A, there is a shown a configuration 200 in which the first sensor 130 may send serial individual signals to a first logic block 202. In instances in which the first sensor 130 is a single axis sensor, such as a single axis accelerometer, the first sensor 130 may communicate a single signal 206 corresponding to the measurements obtained by the first sensor 130 to the first logic block 202. The first logic block 202 may determine whether the orientation of the first sensor 130 is outside of the first predefined orientation range. In addition, the first logic block 202 may output a first notification 208 indicating whether the orientation of the first sensor 130 is within or outside of the first predefined orientation range. In other words, the first logic block 202 may output the first notification 208 to instruct the controller 120 to enable or disable the motor 102.

In instances in which the first sensor 130 is a multiple axis sensor, such as a multiple axis accelerometer, the first sensor 130 may communicate signals corresponding to the multiple axes serially to the first logic block 202. That is, for instance, the first sensor 130 may output a signal 206 that is serially composed of a first subset of signals corresponding to a first orientation along a first axis (e.g., X-axis), a second subset of signals corresponding to a second orientation along a second axis (e.g., Y-axis), and a third subset of signals corresponding to a third orientation along a third axis (e.g., Z-axis). The first logic block 202 may determine whether any of the orientations of the first sensor 130 is outside of a respective first predefined orientation range. In addition, the first logic block 202 may output a first notification 208 indicating whether any of the orientations of the first sensor 130 is within or outside of the first predefined orientation range.

As also shown in FIG. 2A, in the configuration 200, the second sensor 132 may send serial individual signals to a second logic block 204. In instances in which the second sensor 132 is a single axis sensor, such as a single axis accelerometer, the second sensor 132 may communicate a single signal 210 corresponding to the measurements obtained by the second sensor 132 to the second logic block 204. The second logic block 204 may determine whether the orientation of the second sensor 132 is outside of the second predefined orientation range. In addition, the second logic block 204 may output a second notification 212 indicating whether the orientation of the second sensor 132 is within or outside of the second predefined orientation range.

In instances in which the second sensor 132 is a multiple axis sensor, such as a multiple axis accelerometer, the second sensor 132 may communicate signals corresponding to the multiple axes serially to the second logic block 204. That is, for instance, the second sensor 132 may output a signal 210 that is serially composed of a first subset of signals corresponding to a first orientation along a first axis (e.g., X-axis), a second subset of signals corresponding to a second orientation along a second axis (e.g., Y-axis), and a third subset of signals corresponding to a third orientation along a third axis (e.g., Z-axis). The second logic block 204 may determine whether any of the orientations of the second sensor 132 is outside of a respective second predefined orientation range. In addition, the second logic block 204 may output a second notification 212 indicating whether any of the orientations of the second sensor 132 is within or outside of the second predefined orientation range. In any of these examples, the controller 120 may enable or disable activation of the motor 102 based on the whether the first signal 206 indicates that the first element 110 is in an orientation that is outside of the first predefined orientation range and/or the second notification 212 indicates that the second element 106 is in an orientation that is outside of the second predefined orientation range.

Reference is now made to FIG. 2B, which shows a configuration 220 in which the first sensor 130 and the second sensor 132 are multiple axis sensors that output multiple sensor readings respectively to the first logic block 202 and the second logic block 204. As shown, the first sensor 130 may output discreet individual signals 214 corresponding to the multiple detected orientations to the first logic block 202. Particularly, the discreet individual signals 214 may include a first signal corresponding to a first axis, e.g., the X-axis, a second signal corresponding to a second axis, e.g., the Y-axis, and a third signal corresponding to a third axis, e.g., the Z-axis. The first logic block 202 may determine whether any of the orientations of the first sensor 130 is outside of a respective first predefined orientation range. In addition, the first logic block 202 may output a first notification 208 indicating whether any of the orientations of the first sensor 130 is within or outside of the first predefined orientation range.

As also shown in FIG. 2B, the second sensor 132 may output discreet individual signals 216 corresponding to the multiple detected orientations to the second logic block 204. Particularly, the discreet individual signals 216 may include a first signal corresponding to a first axis, e.g., the X-axis, a second signal corresponding to a second axis, e.g., the Y-axis, and a third signal corresponding to a third axis, e.g., the Z-axis. The second logic block 204 may determine whether any of the orientations of the second sensor 132 is outside of a respective first predefined orientation range. In addition, the second logic block 204 may output a second notification 212 indicating whether any of the orientations of the second sensor 132 is within or outside of the second predefined orientation range. In any of these examples, the controller 120 may enable or disable activation of the motor 102 based on the whether the first signal 206 and/or the second notification 212 indicates that the orientation of the first element 110 is outside of the first predefined orientation range and/or the orientation of the second element 106 is outside of the second predefined orientation range.

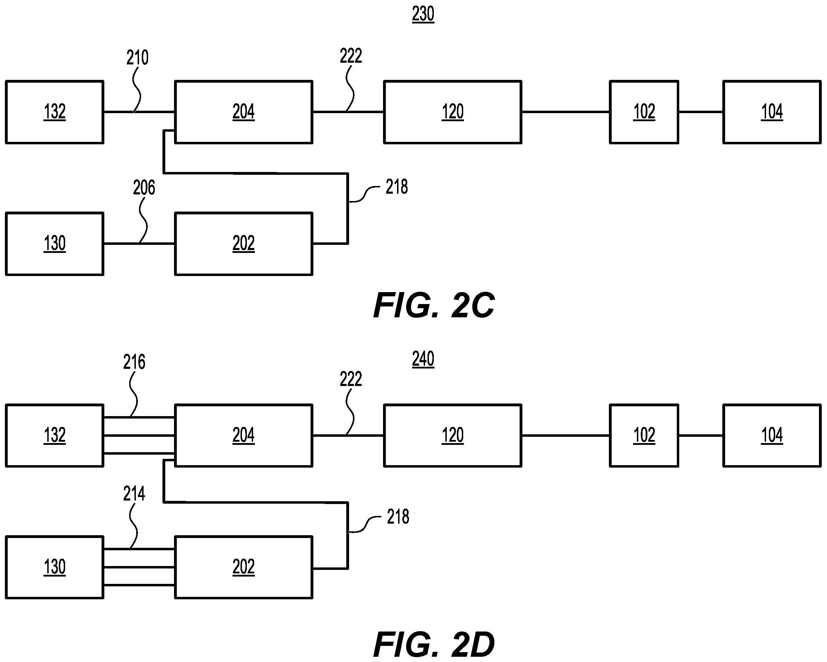

In some examples, and as shown in FIGS. 2C and 2D, the first logic block 202 may be daisy chained with the second logic block 204. Particularly, FIGS. 2C and 2D, respectively, show configurations 230 and 240 in which the first logic block 202 is daisy chained with the second logic block 204 through a connection 218. In these configurations 230, 240, the first logic block 202 may communicate the first notification to the second logic block 204 through the connection 218. That is, the first logic block 202 may communicate the first notification that indicates whether the orientation of the first sensor 130 is within or outside of one or more first predefined orientation ranges to the second logic block 204. In some examples, the second logic block 204 may output the first notification and the second notification to the controller 120 as indicated by reference numeral 222. In other examples, the second logic block 204 may output the second notification to the first logic block 202 and the first logic block 202 may output the first notification and the second notification to the controller 120.

In other examples, the second logic block 204 may determine whether the first notification indicates that the first sensor 130 is within or outside of one or more of the first predefined orientation ranges. In instances in which the second logic block 204 determines that the first notification indicates that the first sensor 130 is outside of the one or more of the first predefined orientation ranges, the second logic block 204 may output a signal 222 to the controller 120 indicating that the motor 102 is to be disabled. Likewise, in instances in which the second logic block 204 determines that the second sensor 132 is within or outside of one or more of the second predefined orientation ranges, the second logic block 204 may output a signal 222 to the controller 120 indicating that the motor 102 is to be disabled.

Although the first logic block 202 has been depicted as being separate from the first sensor 130 in FIGS. 2A-2D, it should be understood that in some examples the first logic block 202 may instead be integrated with the first sensor 130 without departing from the scope of the present disclosure. Likewise, although the second logic block 204 has been depicted as being separate from the second sensor 132, it should be understood that in some examples the second logic block 204 may instead be integrated with the second sensor 132 without departing from the scope of the present disclosure.

According to examples, the controller 120 may perform the functionalities of either or both of the first logic block 202 and the second logic block 204. Particularly, the first sensor 130 may communicate a first signal 206 that corresponds to a measured orientation of the first sensor 130 to the controller 120. In addition, the controller 120 may determine whether the orientation of the first sensor 130 as identified by the first signal is within or outside of the first predefined orientation range. In some examples, the first sensor 130 may communicate one or more signals 214 corresponding to multiple orientations of the first sensor 130 along multiple axes to the controller 120. In these examples, the controller 120 may determine whether any of the orientations of the first sensor 130 is outside of the multiple first predefined orientations corresponding to the multiple axes. In any of these examples, the first logic block 202 may be omitted such that the first sensor 130 may communicate directly with the controller 120.

In addition, or alternatively, the second sensor 132 may communicate a second signal 210 that corresponds to a measured orientation of the second sensor 132 to the controller 120. In addition, the controller 120 may determine whether the position of the second sensor 132 as identified by the second signal 210 is within or outside of the second predefined orientation range. In some examples, the second sensor 132 may communicate one or more signals 216 corresponding to multiple orientations of the second sensor 132 along multiple axes to the controller 120. In these examples, the controller 120 may determine whether any of the orientations of the second sensor 132 is outside of the multiple second predefined orientations corresponding to the multiple axes. In any of these examples, the second logic block 204 may be omitted such that the second sensor 132 may communicate directly with the controller 120.

In examples in which the controller 120 determines that the first sensor 130 is in an orientation that is outside of one or more of the first predefined orientation ranges or that the second sensor 132 is in an orientation that is outside of one or more of the second predefined orientation ranges, the controller 120 may disable operation of the motor 102. In other words, the controller 120 may prevent the motor 102 from actuating the work implement 104 when either of these conditions are met, even when the controller 120 is instructed to actuate the work implement 104, for instance, by an operator of the work equipment 100. However, in examples in which the controller 120 determines that the first sensor 130 is in an orientation that is within each of the first predefined orientation ranges and that the second sensor 132 is in an orientation that is within each of the second predefined orientation ranges, the controller 120 may enable the motor 102 to actuate the work implement 104, for instance, when the controller 120 receives an instruction from the operator of the work equipment 100 to do so. As discussed herein, the operator may send an instruction to the controller 120 to actuate the work implement 104 by pulling a bail handle 152 or other mechanism on the first element 110.

Although the power equipment 100 has been depicted in FIGS. 1A-1E as being a walk-behind lawn mower, it should be understood that the power equipment 100 may be other types of power equipment without departing from a scope of the present disclosure. Particularly, the power equipment 100 may be any type of power equipment having a first element 110 that is rotatably mounted to a second element 106 and the second element 106 houses or otherwise supports a work implement 104. For instance, the power equipment 100 may be a snow thrower, a tiller, a cultivator, a string trimmer, a trimmer, an edger, or the like.

By way of particular non-limiting example, the power equipment 100 may be a string trimmer as shown in FIGS. 1F-1H. FIGS. 1F-1H, respectively, depict perspective views of a string trimmer 100 at multiple positions, in accordance with an embodiment of the present disclosure. The reference numerals shown in FIGS. 1F-1H correspond to the reference numerals shown in FIGS. 1A-1E and thus, all of the components to which the reference numerals correspond are not described in detail again herein. Additionally, it should be understood that the first sensor 130 and the second sensor 132 may be housed within the first element 110 and the second element 106, respectively, and are thus not visible in FIGS. 1F-1H.

As shown in FIG. 1F, the string trimmer 100 is depicted as including a first element 110 and a second element 106. The second element 106 is also depicted as supporting a motor 102 and a work implement 104. The work implement 104 is a rotating member attached to the motor 102, in which one or more strings may extend out of the work implement 104. The first element 110 is also depicted as being rotatably mounted to the second element 106, as denoted by the arrows 112. Particularly, a user may depress a locking mechanism 114 to release the second element 106 from locking engagement with the first element 110. Following release of the second element 106 from the first element 110, the second element 106 may be rotated or tilted with respect to the first element 110 as shown in FIG. 1G.

As discussed herein, the first sensor 130 may detect the orientation of the first element 110 and the second sensor 132 may detect the orientation of the second element 106. According to examples, the first sensor 130 and the second sensor 132 may send signals to the controller 120 and the controller 120 may disable the motor 102 in instances in which the signals indicate that the first element 110 and/or the second element 106 are outside of respective predefined orientation ranges. For instance, the controller 120 may enable the motor 102 when the first element 110 and the second element 106 are oriented as shown in FIG. 1F and may disable the motor 102 when the first element 110 and the second element 106 are oriented as shown in FIG. 1G.

Additionally, the second element 106 may continue to be rotated or collapsed with respect to the first element 110 as shown in FIG. 1H, which may be a storage position. In the storage position, the controller 120 may also disable the motor 102 to prevent unintentional operation of the string trimmer 100. In some examples, the controller 120 may compare the relative positions of the first element 110 and the second element 106 to determine whether to enable or disable the motor 102. In these examples, the controller 120 may enable the motor 102 when the relative positions are as shown in FIG. 1F and may disable the motor 102 when the relative positions are as shown in FIGS. 1G and 1H.

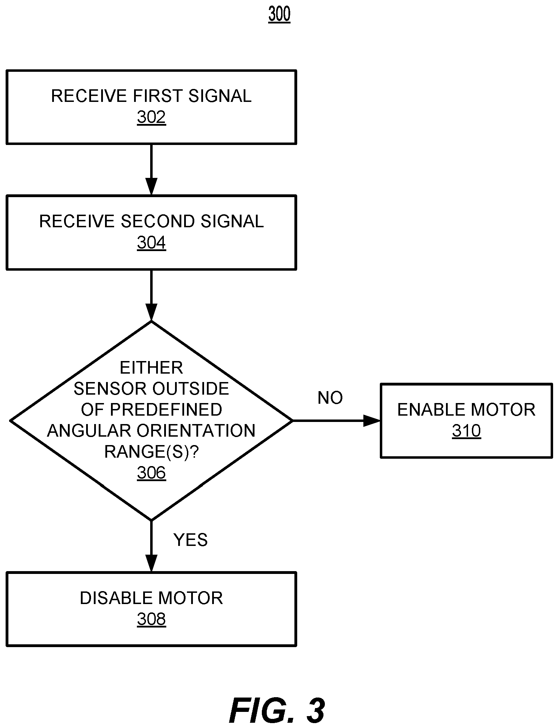

Reference is now made to FIG. 3, which shows a flow diagram of a method 300 for controlling a motor 102 in a power equipment 100, in accordance with an embodiment of the present disclosure. It should be understood that the method 300 depicted in FIG. 3 may include additional operations and that some of the operations described therein may be removed and/or modified without departing from the scope of the method 300. The description of the method 300 is made with reference to the features depicted in FIGS. 1A-2D for purposes of illustration.

At block 302, the controller 120 may receive a first signal 206 (or a first notification 208) corresponding to a detected orientation of a first sensor 130 positioned on a first element 110 of a power equipment 100. The power equipment 100 may include a motor 102 to actuate a work implement 104 of the power equipment 100. As discussed herein, the controller 120 may receive the first signal 206 directly from the first sensor 130 or the controller 120 may receive a first notification 208 from a first logic block 202 associated with the first sensor 130. Alternatively, the controller 120 may receive the first signal 206 (or the first notification 208) from a second logic block 204 that is daisy chained with the first logic block 202.

At block 304, the controller 120 may receive a second signal 210 (or a second notification 212) corresponding to a detected orientation of a second sensor 132 positioned on a second element 106 of the power equipment 100. As discussed herein, the controller 120 may receive the second signal 210 directly from the second sensor 132 or the second notification 212 from a second logic block 204 associated with the second sensor 132. Alternatively, the controller 120 may receive the second signal 210 (or the second notification 212) from a first lock block 202 that is daisy chained with the second logic block 204.

At block 306, the controller 120 may determine whether the motor 102 is to be enabled or disabled based on the first signal 206 (first notification 208) and the second signal 210 (second notification 212). That is, the controller 120 may determine whether the orientations of either of the first sensor 130 and the second sensor 132 as respectively indicated in the first signal 206 (first notification 208) and the second signal 210 (second notification 212) are outside of respective predefined orientation ranges. In instances in which the first sensor 130 includes a first logic block 202, the first notification 208 may include an indication as to whether or not one or more of the orientations of the first sensor 130 are within one or more of the first predefined orientation ranges. Likewise, in instances in which the second sensor 132 includes a second logic block 204, the second notification 212 may include an indication as to whether or not one or more of the orientations of the second sensor 132 are within one or more of the second predefined orientation ranges. In these instances, the controller 120 may determine whether one or more of the orientations of the first sensor 130 are outside of one or more of the first predefined orientation ranges based on the indication identified in the first notification 208. Likewise, the controller 120 may determine whether one or more of the orientations of the second sensor 132 are outside of one or more of the second predefined orientation ranges based on the indication identified in the second notification 212.

In instances in which the first sensor 130 does not include the first logic block 202 or in which the controller 120 is to determine whether the orientation of the first sensor 130 is outside of the first predefined orientation range, the first sensor 130 may communicate the detected orientation of the first sensor 130 to the controller 120. For instance, the first sensor 130 may output a first value corresponding to the detected orientation of the first sensor 130 to the controller 120. Likewise, in instances in which the second sensor 132 does not include the second logic block 204 or in which the controller 120 is to determine whether the orientation of the second sensor 132 is outside of the second predefined orientation range, the second sensor 132 may communicate the detected orientation of the second sensor 132 to the controller 120. For instance, the second sensor 132 may output a second value corresponding to the detected orientation of the second sensor 132 to the controller 120.

In addition, the controller 120 may determine whether the first value indicates that the first sensor 130 is at an orientation that is within the first predefined orientation range. The controller 120 may also determine whether the second value indicates that the second sensor 132 is at an orientation that is within a second predefined orientation range. The controller 120 may compare the first value with a first value range corresponding to the first predefined orientation range and the second value with a second value range corresponding to the second predefined orientation range.

In any of the examples above, based on a determination that the orientation of the first sensor 130 is outside of the first predefined orientation range and/or that the orientation of the second sensor 132 is outside of the second predefined orientation range, at block 308, the controller 120 may disable the motor 102. That is, the controller 120 may prevent the motor 102 from actuating the work implement 104 even when an operator pulls the bail handle 152 on the power equipment 100. However, based on a determination that the orientation of the first sensor 130 is within the first predefined orientation range and that the orientation of the second sensor 132 is within the second predefined orientation range, at block 310, the controller 120 may enable the motor 102. That is, the controller 120 may enable the motor 102 to actuate the work implement 104, for instance, when an operator pulls the bail handle 152 after the power equipment 100 has been activated.

Some or all of the operations set forth in the method 300 may be included as utilities, programs, or subprograms, in any desired computer accessible medium. In addition, the method 300 may be embodied by computer programs, which may exist in a variety of forms both active and inactive. For example, they may exist as machine-readable instructions, including source code, object code, executable code or other formats. Any of the above may be embodied on a non-transitory computer readable storage medium.

Examples of non-transitory computer readable storage media include computer system RAM, ROM, EPROM, EEPROM, and magnetic or optical disks or tapes. It is therefore to be understood that any electronic device capable of executing the above-described functions may perform those functions enumerated above.

Although described specifically throughout the entirety of the instant disclosure, representative examples of the present disclosure have utility over a wide range of applications, and the above discussion is not intended and should not be construed to be limiting, but is offered as an illustrative discussion of aspects of the disclosure.

What has been described and illustrated herein is an example of the disclosure along with some of its variations. The terms, descriptions and figures used herein are set forth by way of illustration only and are not meant as limitations. Many variations are possible within the scope of the invention, which is defined by the following claims.

## Claims

1. A power equipment comprising:
a controller;
a motor to actuate a work implement;
a first element;
a second element supporting the motor, wherein the first element is rotatably mounted to the second element;
a first sensor positioned to detect an orientation of the first element, wherein the first sensor is configured to output a first signal corresponding to the detected orientation of the first element to the controller;
a second sensor positioned to detect an orientation of the second element, wherein the second sensor is configured to output a second signal corresponding to the detected orientation of the second element to the controller; and
wherein the controller is configured to enable or disable the motor based on both the first signal and the second signal.

2. The power equipment of claim 1, further comprising:
a first logic block in communication with the first sensor, wherein the first logic block is configured to:
determine, based on the first signal, whether the orientation of the first element is outside of a first predefined orientation range;
generate a first notification to indicate that the first element is outside of the first predefined orientation range based on a determination that the first element is outside of the first predefined orientation range; and
output the first notification to the controller, wherein the controller is configured to disable the motor based on receipt of the first notification indicating that the orientation of the first element is outside of the first predefined orientation range.

3. The power equipment of claim 2, wherein the first predefined orientation range is between about -15° and about 80° from the horizontal axis.

4. The power equipment of any one of the preceding claims, further comprising:
a second logic block in communication with the second sensor, wherein the second logic block is configured to:
determine, based on the second signal, whether the orientation of the second element is outside of a second predefined orientation range;
generate a second notification to indicate that the orientation of the second element is outside of the second predefined orientation range based on a determination that the orientation of the second element is outside of the second predefined orientation range; and
output the second notification to the controller, wherein the controller is configured to disable the motor based on receipt of the second signal indicating that the orientation of the second element is outside of the second predefined orientation range.

5. The power equipment of claim 4, wherein the second predefined orientation range is between about 45° and about -30° from the horizontal axis.

6. The power equipment of claim 1, wherein the controller is configured to enable the motor based on the first signal indicating that the orientation of the first element is within a first predefined orientation range and the second signal indicating that the orientation of the second element is within a second predefined orientation range.

7. The power equipment of claim 6, wherein the controller is configured to disable the motor based on at least one of the first signal indicating that the orientation of the first element is outside of the first predefined orientation range or the second signal indicating that the orientation of the second element is outside of the second predefined orientation range.

8. The power equipment of claim 1, wherein the first signal indicates the detected orientation of the first element, and wherein the controller is configured to:
determine, from the first signal, whether the orientation of first element is outside of a first predefined orientation range; and
disable the motor based on a determination that the orientation of the first element is outside of the first predefined orientation range.

9. The power equipment of claim 1 or claim 8, wherein the second signal indicates the detected orientation of the second element, and wherein the controller is configured to:
determine, from the second signal, whether the orientation of the second element is outside of a second predefined orientation range; and
disable the motor based on a determination that the orientation of the second element is outside of the second predefined orientation range.

10. A method comprising:
receiving, by a controller, a first signal corresponding to a detected orientation of a first sensor positioned on a first element of a power equipment, wherein the power equipment includes a motor to actuate a work implement of the power equipment;
receiving, by the controller, a second signal corresponding to a detected orientation of a second sensor positioned on a second element of the power equipment, wherein the first element is rotatably mounted to the second element;
determining, by the controller, whether the motor is to be enabled or disabled based on the first signal and the second signal; and
enabling or disabling, by the controller, the motor based on the determination.

11. The method of claim 10, wherein the first signal corresponding to the detected orientation of the first sensor includes an indication as to whether the detected orientation of the first sensor is within a first predefined orientation range and wherein the second signal corresponding to the detected orientation of the second sensor includes an indication as to whether the detected orientation of the second sensor is within a second predefined orientation range, and wherein determining whether the motor is to be enabled or disabled further comprises:
determining that the motor is to be disabled based on either of:
the first signal indicating that the detected orientation of the first sensor is outside of the first predefined orientation range; or
the second signal indicating that the detected orientation of the second sensor is outside of the second predefined orientation range.

12. The method of claim 10, wherein the first signal corresponding to the detected orientation of the first sensor comprises a first value corresponding to the detected orientation of the first sensor and the second signal corresponding to the detected orientation of the second sensor comprises a second value corresponding to the detected orientation of the second sensor, and wherein determining whether the motor is to be enabled or disabled further comprises:
determining whether the first value indicates that the first sensor is at an orientation that is within a first predefined orientation range;
determining whether the second value indicates that the second sensor is at an orientation that is within a second predefined orientation range; and
determining that the motor is to be disabled based on a determination that:
the orientation of the first sensor is outside of the first predefined orientation range; or
the orientation of the second sensor is outside of the second predefined orientation range.

13. The method of claim 10, wherein the first signal corresponds to orientations of the first sensor detected across multiple axes and wherein the second signal corresponds to orientations of the second sensor detected across multiple axes, and wherein determining whether the motor is to be enabled or disabled further comprises:
determining that the motor is to be disabled based on either of:
the first signal indicating that any of the detected orientations of the first sensor is outside of respective first predefined orientation ranges; or
the second signal indicating that any of the detected orientations of the second sensor is outside of respective second predefined orientation ranges.
